# EUROPEAN PATENT APPLICATION

(11) **EP 2 374 380 A2**
(43) Date of publication of application: **12.10.2011**
(21) Application number: 10183070.1
(22) Date of filing: 30.09.2010
(51) Int. Cl.: A47J 25/00

(54) **Coring device**

(30) Priority: 01.10.2009 US 247696 P
(71) Applicant: Browne & Co, Markham, Ontario L3R 1E3 (CA)
(72) Inventor: Ho, Neal, San Francisco, CA 94158 (US); Chan, David, Scarborough Ontario M1W 3W2 (CA)
(74) Representative: Burt, Matthew Thomas

(57) **Abstract**

A coring device (10) is provided and in particular a coring device for coring cupcakes or similar food items. The coring device may comprise a body (12) defining a channel (18) therein; a plunger (22), received within the channel and configured to slide therein; and a flange (20), extending around at least a portion of the body. The body has a first and second end (14, 16), at least one of which defines a cutting edge (16). The body and the flange may be a unitary construction.

## Description

### FIELD

The present matter relates to a coring device and more particularly a cupcake coring device.

### BACKGROUND

Coring devices are known to remove portions of food items that are not required. For example, coring devices are used to remove the core portion of fruit, such as apples, which are generally not desirable to eat.

Several approaches are known to remove the core portion of fruit, including either cutting the fruit open and removing the core, or using a special coring device that is adapted to only remove the core portion.

Typically, coring devices include a hollow, generally cylindrical, body portion that includes a serrated edge that is driven into the food item to be cored by a user. The user then turns the coring device within the food item and pulls back on the device to remove the coring device and the core portion of the food. The amount of the food item that is removed is therefore controlled by the user and their judgment as to how far into the food item the coring device is driven.

Once the coring device is removed from the food item, the core portion must usually be removed from the coring device before it can be used again.

### SUMMARY

There is provided a coring device for removing a portion of food from a food item. In one embodiment, there is provided a cupcake coring device for removing a pre-determined portion of a cupcake.

In a first aspect, a coring device comprises a body defining a channel within it and a plunger that is located within the channel and is configured to slide within it. The coring device also includes a flange extending around at least a portion of the body. In one embodiment the plunger is able to extend out of the channel to protrude out of the body of the coring device. In one embodiment the body has a first and second end between which the channel extends, and at least one of the ends defines a cutting edge.

In an alternative embodiment, the plunger of the coring device is weighted. In another embodiment, the flange is spaced from one end of the coring device at a location that allows for a pre-determined amount of cored food product to be removed from the food item.

In another aspect, a coring device comprises a body having a first end, a second end defining a cutting edge and a channel extending between the two ends. A plunger is received within the channel and is operable to slide therein between a first position in which the plunger abuts the first end and a second position in which the plunger extends out of the second end. The coring device also includes an adjustable flange extending around at least a portion of the body at a predetermined distance from the second end.

### BRIEF DESCRIPTION OF THE DRAWINGS

The coring device will now be described in further detail with reference to the following figures:

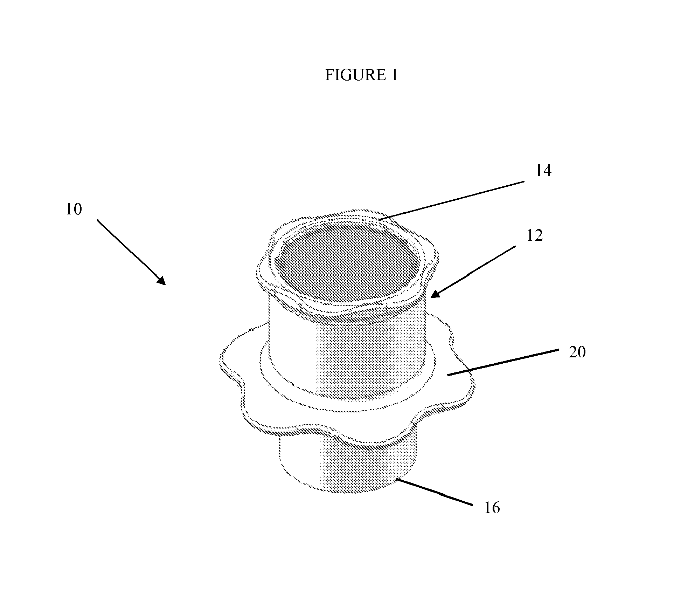

Figure 1 is a perspective view of one embodiment of the coring device described herein;

Figure 2A is a side view of the coring device of Figure 1;

Figure 2B is a cross sectional view of the coring device of Figure 2A taken along lines A-A showing the plunger in a raised position;

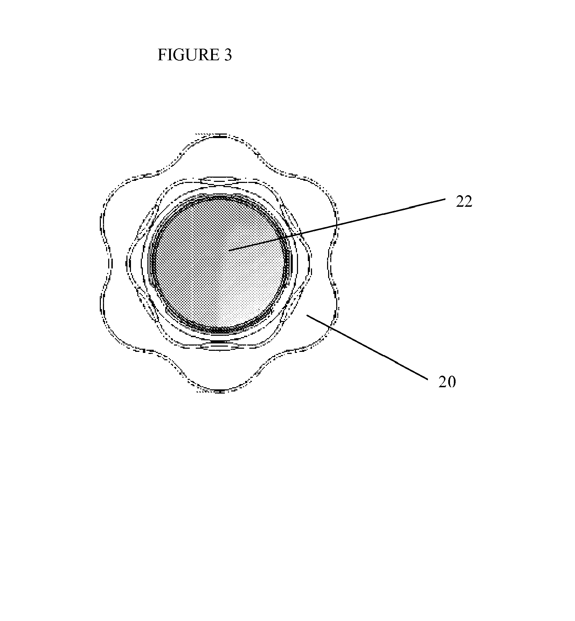

Figure 3 is a top view of the coring device of Figure 1;

Figure 4 is a cross sectional view of the coring device of Figure 1 showing the plunger in a lowered position;

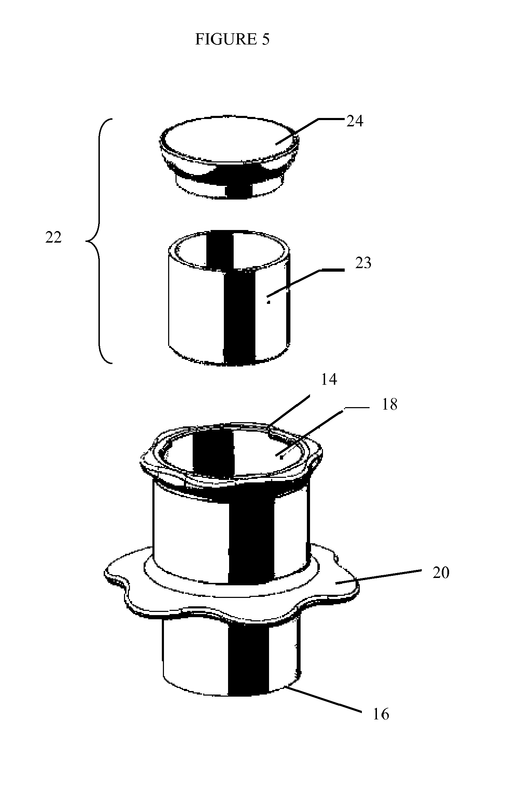

Figure 5 is an exploded view of the coring device of Figure 1; and

Figures 6A-F illustrate one use of the coring device on a cupcake.

### DETAILED DESCRIPTION OF THE PREFERRED EMBODIMENTS

The present matter provides a coring device for use in removing a cored portion of a food item. Preferably the coring device is used to remove a cored portion of a cupcake or other similar food item.

The coring device will be described in detail with reference to the accompanying Figures.

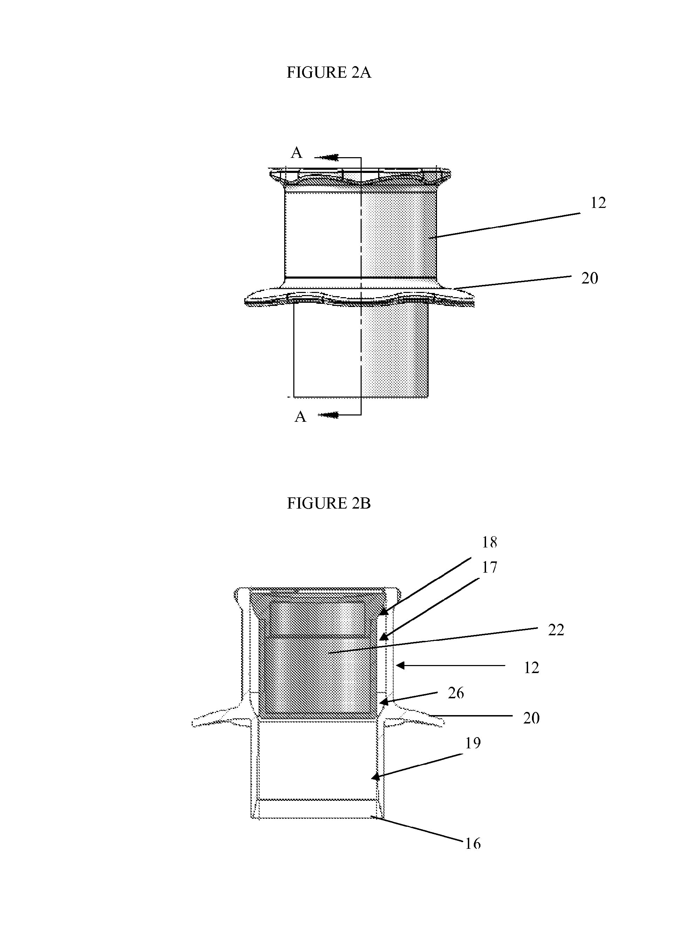

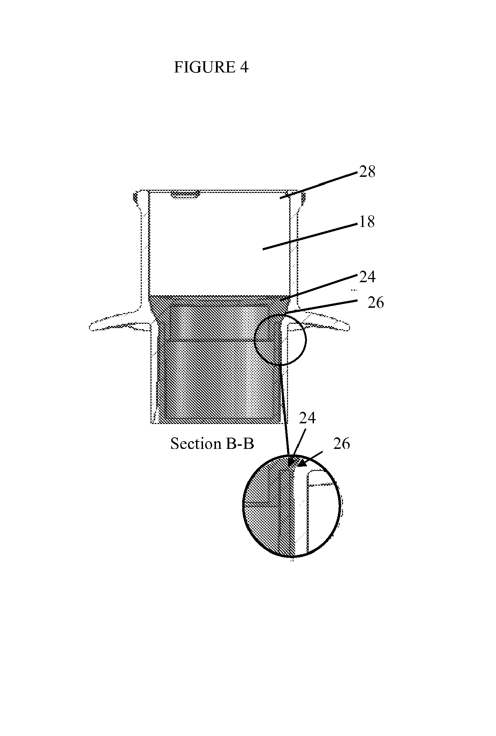

The coring device is indicated generally at numeral 10. The coring device includes a hollow body 12 having a first end 14 and a second end 16 and defines a channel 18 extending therebetween. In the illustrated embodiment, the body 12 is cylindrical shaped with the channel 18 extending through the body from the first end 14 to the second end 16. The channel 18 can be clearly seen in Figures 2B and 4. It should be noted that body 12 need not be circular in cross-section. Channel 18 is defined by a first channel portion 17, a second channel portion 19 and narrowing portion between the channel portions providing a first internal edge 26. First channel portion 17 is slightly larger in diameter than lower channel portion 19. First end 14 defines an external end of first channel portion 17 while second end 16 defined an external end of second channel portion 19.

The body 12 includes a flange 20 extending outwardly therefrom. The flange 20 is positioned around the body 12 at a predetermined distance from the second end 16. In use, when the coring device 10 is pushed into the food item to be cored, the flange 20 abuts against the food item once the length of the coring device 10 between the second end 16 and the flange 20 is received within the food item. The flange 20 prevents further movement of the coring device into the food item and thereby controls the amount of cored food material that is removed from the food item. In the embodiment shown, the flange extends around the entire periphery of the body 12. However, it will be understood that the flange 20 may only extend around a portion of the periphery of the body 12 or may comprise one or more projections located around the periphery of the body 12 that serve the same purpose as described above for the flange 20. In a preferred embodiment, the flange 20 extends outwardly from the body 12 with a downward slope at its periphery. In this embodiment, the flange 20 reflects the curvature of a top surface of a cupcake and will rest upon the surface thereof when in use as a cupcake coring device. However, it will be understood that the profile of the flange 20 is not limited to this form.

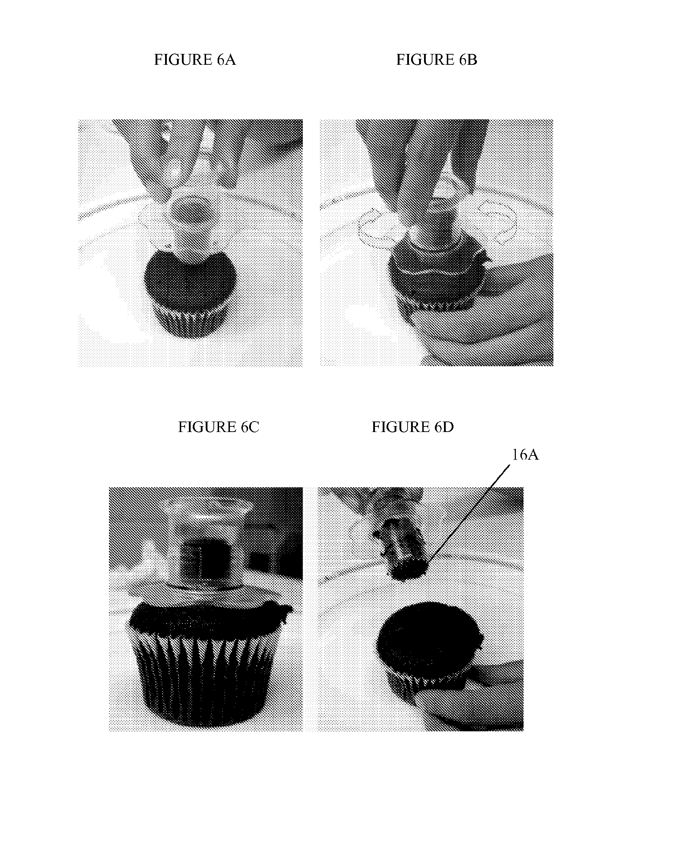

The second end 16 of the body 12 defines a cutting edge, which assists in the placement and movement of the coring device into the food item. In one embodiment, shown in Figures 6A-E, the second end 16 includes a serrated edge 16A which helps to cut the food item to remove a cored portion. The serrated edge 16A may extend about the entirety of the second end 16, or may extend about a portion thereof. The serration used in the cutting edge may be of any size or shape depending on the desired end use. The second end 16 need not be 90° to the axis of the body. The second end 16 may be an ellipse or other shape that provides a cutting edge that will be operable to cut the food item when the coring device 10 is in use.

Received within the channel 18 is a plunger 22. Plunger 22 is operable to slide within the channel and is operable to extend out of the second end 16. In the illustrated embodiment, plunger 22 includes an upper edge 24 that extends outwardly from the main body 23 of the plunger 22. The upper edge 24 is shaped to abut against and rest upon the first internal ledge 26 when the plunger 22 moves within the channel 18 towards the second end 16. The abutment of the upper edge 24 of the plunger 22 against the first internal ledge 26 prevents the plunger 22 from wholly moving past the first internal ledge 26 and out of the second end 16 of the body 12, through lower channel 19. The plunger 22 may extend partially out of the second end 16, however the ledge prevents complete escape of the plunger out of second end 16.

As can be seen from the accompanying figures, the cross sectional shape of the plunger 22 is generally the same as the channel 18 located within the body 12. In addition, the end of the plunger 22 that contacts the food item to be cored is preferably sized only marginally smaller than the lower channel 19 of channel 18 which aids in preventing portions of the cored food from entering the channel 18. (See Fig. 4)

In one embodiment, the plunger 22 is weighted so that it rests in the lower end of the body 12 adjacent the second end 16 with the upper edge 24 resting against the first internal ledge 26. In use, the force of the user pushing down on the coring device 10 moves the body 12, beginning at the second end 16 into the food item. Once the food item moves into channel 18 the plunger 22 is forced upwards toward the first end 14. The weighting of the plunger 22 may be provided by the weight of the material used to form the plunger.

The upper edge 24 of the plunger 22, when moved within the channel 18, will abut and rest against a second internal ledge 28 which will prevent the plunger from moving out of the first end 14 of the channel 18. It will be understood that the configuration of the upper edge 24 and the internal ledges 26 and 28 serve to keep the plunger 22 within a predetermined location within channel 18, i.e. to ensure that the plunger 22 does not fall out of the channel 18. The internal ledges 26, 28 may extend around the internal periphery of the channel 18 or may comprise one or more protrusions that extend into the channel that prevent movement of the plunger 22 past the respective ledge or protrusion.

The use of the coring device 10 will now be described in reference to Figures 6A-F. The coring device 10 is illustrated for use as a cupcake coring device. Flange 20 is configured a preferred distance from the cutting edge, defined by second end 16, for removing a predetermined amount of the cupcake.

Initially, the second end 16 of the coring device 10 is placed on the top part of the cupcake, at a position in which coring is desired. In this position the weighted plunger 22 is located at the bottom of the channel 18 adjacent second end 16, seen in Figure 6A.

The user then pushes and twists the coring device, as shown in Figure 6B, until the flange 20 rests against the top surface of the cupcake, seen in Figure 6C. At this point, the cored portion of the cupcake is located in the lower end of channel 18 and the plunger 22 has been pushed toward the first end 14 of the coring device 10.

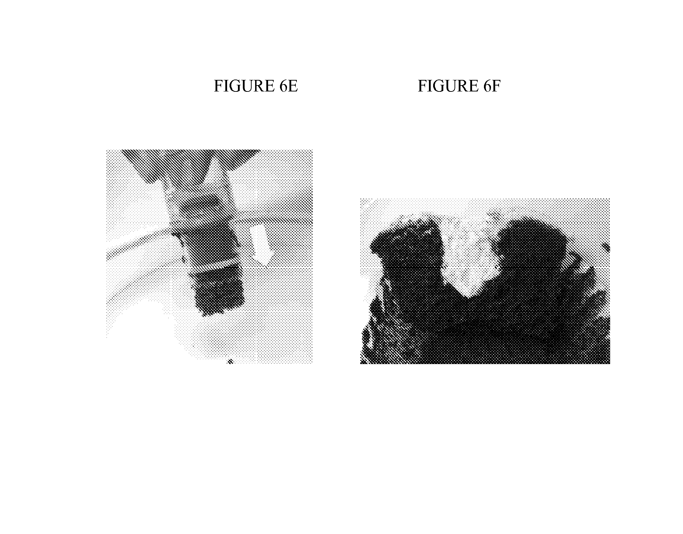

To remove the cored cupcake portion, the user pulls the coring device out of the cupcake, as seen in Figure 6D, with the cored portion resting in channel 18. The weighted plunger 22 will then push the cored portion out of the channel. Alternatively, if required, a user can push on the upper edge 24 of the plunger 22 to assist in the removal of the cored portion through second end 16, seen in Figure 6E.

The hole that has been created in the cupcake, by the removal of the cored portion, may then be filled, as desired, shown in Figure 6F.

The coring device 10, described herein, may be formed from any suitable food grade material. Examples of the types of materials that may be used include plastics, for example polypropylene. Other suitable materials that are known in the art may also be used. The body 12 and the flange 20 may be a unitary construction. The plunger 22 may be formed from any suitable material, for example plastic. In one embodiment the plunger 22 is formed from polypropylene. The plunger 22 may be formed from a sufficient amount of polypropylene that provides the required weight to allow the plunger 22 to move to the bottom of the channel 18 prior to use. In an alternative embodiment, additional material may be used to provide extra weight to the plunger 22, if required

The coring device is preferably formed from a transparent material so that a user may see the cored food portion.

While this device has been described with reference to illustrative embodiments and examples, the description is not intended to be construed in a limiting sense. Thus, various modification of the illustrative embodiments, as well as other embodiments, will be apparent to persons skilled in the art upon reference to this description. It is therefore contemplated that the appended claims will cover any such modifications or embodiments. Further, all of the claims are hereby incorporated by reference into the description of the preferred embodiments.

Any publications, patents and patent applications referred to herein are incorporated by reference in their entirety to the same extent as if each individual publication, patent or patent application was specifically and individually indicated to be incorporated by reference in its entirety.

## Claims

1. A coring device (10) comprising:
a body (12) defining a channel (18) therein;
a plunger (22), received within the channel and configured to slide therein; and
a flange (20), extending around at least a portion of the body.

2. The coring device according to claim 1, wherein the body has a first and second end (14, 16), at least one of which defines a cutting edge (16).

3. The coring device according to claim 1 or claim 2, wherein the body and the flange are a unitary construction.

4. The coring device according to claim 2, wherein the flange is located at a predetermined distance from the cutting edge.

5. The coring device according to claim 2, wherein the plunger is configured to slide within the channel and is operable to extend beyond the end defining the cutting edge.

6. The coring device according to any one of claims 3 to 5 wherein the cutting edge comprises a serrated edge (16A).

7. The coring device according to any one of claims 1 to 6, wherein the body and the flange are formed from plastic material.

8. The coring device of any one of claims 1 to 7, wherein the channel and plunger are configured to prevent the plunger from sliding wholly through the channel.

9. The coring device of claim 8 wherein the channel is defined by an internal ledge (26) between a first channel portion (17) and as second channel portion (19) and the plunger comprises an edge (24) for abutting the internal ledge to prevent the plunger from sliding wholly through the channel.

10. The coring device according to any one of claims 1 to 8, wherein the plunger is formed from plastic material.
